# EUROPEAN PATENT APPLICATION

(11) **EP 4 527 643 A1**
(43) Date of publication of application: **26.03.2025**
(21) Application number: 23198208.3
(22) Date of filing: 19.09.2023
(51) Int. Cl.: B60G 17/052

(54) **VALVE DEVICE, AIR SUSPENSION SYSTEM AND COMMERCIAL VEHICLE**

(71) Applicant: ZF CV Systems Europe BV, 1170 Brüssel (BE)
(72) Inventor: BULAJ, Lukasz, 55-050 BEDKOWICE (PL); Zieziula, Krzysztof, 55-040 BIELANY WROCLAWSKIE (PL)
(74) Representative: Ohlendorf, Henrike

(57) **Abstract**

The invention is directed to a valve device (100) for an air-suspension system (500) that comprises an input port (1) for receiving compressed air (A), an output port for providing compressed air (A) to an air bellow (504) and an exhaust port (3). It comprises a flow control unit (102) with a mechanical control input interface (104) for receiving a mechanical input signal (MS) for mechanically controlling the flow control unit (102) and an electrical control input unit (106) for receiving an electrical input signal (EL) for electrically controlling the flow control unit (102). A valve unit (108) is configured to control a respective pneumatic connection (P1, P2) in dependence on the mechanical input signal (MS) and the electrical input signal (ES). The electrical control input unit is configured to receive the electrical input signal (EL) and to provide a pneumatic control signal (PS) for pneumatically controlling the valve unit (108).

## Description

The present invention is directed to a valve device for an air suspension system, to an electrically controllable air suspension system, to a mechanically controllable air suspension system, to a mechanically and electrically controllable air suspension system and to a commercial vehicle.

Document EP 2 540 538 B1 describes a pneumatic spring assembly that includes a level control valve unit and a manually actuatable lifting and lowering valve unit interposed in pneumatic series connection between pressurized air sources, i.e. containers, and pneumatic spring bellows. The lifting and lowering valve unit is switched back and forth between a passage position and a locking position during driving operation. A level of the bellows is changed in the passage position, and remains unchanged in the locking position, and the level control valve unit has an electrically controllable 2/2-way valve. The lifting and lowering valve unit is controllable both mechanically and electrically.

It would be beneficial to provide an alternative valve device with increased reliability and lower production costs that can be implemented both in electrically and mechanically controlled air suspension systems.

This is where the invention comes in, wherein it is an objective of the present invention to provide a valve device that offers an increased reliability and lower production costs.

The object is achieved in a first aspect of the invention by a valve device according to claim 1, which is suitable for use in an air suspension system of a commercial vehicle.

The valve device of the first aspect of the invention comprises an input port that is adapted for a pneumatic connection to a compressed air supply unit and is configured to receive compressed air from the compressed air supply unit. The valve device also comprises an output port that is adapted for a pneumatic connection to an air bellow and that is configured to provide compressed air to the air bellow. The valve device also comprises an exhaust port for exhausting compressed air to an environment.

Furthermore, the valve device comprises a flow control unit that includes a mechanical control input interface adapted for a mechanical connection to a mechanical actuator and configured to receive a mechanical input signal for mechanically controlling the flow control unit. Additionally, the valve device comprises an electrical control input unit that is adapted for an electrical connection to an electronic control unit and that is configured to receive an electrical input signal for electrically controlling the flow control unit.

The valve device of the first aspect of the invention further includes a valve unit that is configured to establish or to interrupt a respective pneumatic connection between the input port and the output port and between the output port and the exhaust port, in dependence on the mechanical input signal and the electrical input signal.

According to the invention, the electrical control input unit is configured to receive the electrical input signal and to provide a pneumatic control signal for pneumatically controlling the valve unit.

Thus, the valve unit which controls the pneumatic connection between the input port and the output port and between the output port and the exhaust port is solely mechanically and/or pneumatically actuated or controlled. A control of the valve device via the mechanical control input interface causes a mechanical actuation of the valve unit, whereas a control of the valve device via the electrical control unit results in a pneumatic control of the valve unit. The valve unit therefore is not directly controlled using an electrical signal. The electrical input signal is received at the electrical control input unit, which in turn provides a pneumatic signal for actuating or controlling the valve unit of the valve device. This allows for a simplification of the construction and operation of the valve unit and for an increase of its reliability and a reduction of the production costs, due to the less complexity achieved by not having to implement an additional electrical interface at the valve unit.

In the following, developments of the valve device of the first aspect of the present will be presented.

In a development, the electrical control input unit is configured to receive, as electrical input signals, an electrical lift signal indicative of an instruction to fill the air bellow with compressed air and an electrical lower signal indicative of an instruction to exhaust the compressed air from the air bellow, and to provide as pneumatic control signal a pneumatic lift signal or a pneumatic lower signal respectively to the valve unit in dependence thereof. In this particular development, upon receipt of the pneumatic lift signal, the valve unit is configured to establish the pneumatic connection between the input port and the output port and to interrupt the pneumatic connection between the output port and the exhaust port. Further, upon receipt of the pneumatic lower signal, the valve unit is configured to establish the pneumatic connection between the output port and the exhaust port and to interrupt the pneumatic connection between the input port and the output port. Also, when no electrical input signal is received, the valve unit is configured to interrupt the pneumatic connections between the input port and the output port and between the output port and the exhaust port.

The electrical input signals provided to the electrical control input unit, namely the electrical lift signal and the electrical lower signal are used to generate a pneumatic lift signal and a pneumatic lower signal respectively, which are then provided as the pneumatic control signal for actuating the valve unit. When the pneumatic lift signal is provided by the electrical control input unit, as a result of having received the electrical lift signal, the valve unit is configured to pneumatically connect the input port to the output port, and to pneumatically disconnect the output port and the exhaust port. This enables a provision of compressed air from a compressed air supply unit that can be connected to the input port to the air bellow that can be connected to the output port. This compressed air can therefore fill the air bellow, and a chassis of the vehicle can be raised with respect to the axle. When the pneumatic lower signal is provided by the electrical control input unit, as a result of having received the electrical lower signal, the valve unit is configured to pneumatically connect the output port to the exhaust port, and to pneumatically disconnect the input port and the output port. This enables a venting operation of compressed air from the air bellow to the exhaust port. This compressed air can therefore leave the air bellow, and a chassis of the vehicle can be lowered with respect to the axle. When no electrical input signal is provided, the valve unit is configured to interrupt the pneumatic connections between the input port and the output port and between the output port and the exhaust port, so that a current filling level of the air bellow can be maintained.

In another development, the mechanical control input interface is configured to receive, as mechanical input signals, a mechanical lift signal indicative of an instruction to fill the air bellow with compressed air, a mechanical lower signal indicative of an instruction to exhaust the compressed air from the air bellow, and a mechanical drive signal, and to provide the respective mechanical lift signal or the mechanical lower signal or the mechanical drive signal to the valve unit. In this embodiment, upon receipt of the mechanical lift signal, the valve unit is configured to establish the pneumatic connection between the input port and the output port and to interrupt the pneumatic connection between the output port and the exhaust port. Further, upon receipt of the mechanical lower signal, the valve unit is configured to establish the pneumatic connection between the output port and the exhaust port and to interrupt the pneumatic connection between the input port and the output port. Additionally, upon receipt of the mechanical drive signal, the valve unit is configured to interrupt the pneumatic connections between the input port and the output port and between the output port and the exhaust port.

The mechanical input signals provided to the mechanical control input unit, namely the mechanical lift signal, the mechanical lower signal as well as the mechanical drive signal are used to actuate the valve unit. When the mechanical lift signal is received by the valve unit, the valve unit is configured to pneumatically connect the input port to the output port, and to pneumatically disconnect the output port and the exhaust port. This enables a provision of compressed air from a compressed air supply unit that can be connected to the input port to the air bellow that can be connected to the output port. This compressed air can therefore fill the air bellow, and a chassis of the vehicle can be raised with respect to the axle. When the mechanical lower signal is received by the valve unit, the valve unit is configured to pneumatically connect the output port to the exhaust port, and to pneumatically disconnect the input port and the output port. This enables a venting operation of compressed air from the air bellow to the exhaust port. This compressed air can therefore leave the air bellow, and a chassis of the vehicle can be lowered with respect to the axle. When the mechanical drive signal is received at the valve unit, the valve unit is configured to interrupt the pneumatic connections between the input port and the output port and between the output port and the exhaust port, so that a current filling level of the air bellow can be maintained.

In one development, the valve unit comprises a plurality of valve elements, having a pneumatic operation mode that is governed by a pneumatic control signal and a mechanic operation mode that is governed by a mechanic control signal.

In particular, in this development, the valve elements include a first valve element having a first-valve first port connected to the input port and a first-valve second port, and wherein in a first-valve actuated state, the first-valve first port is disconnected from the first-valve second port and in a first-valve unactuated state, the first-valve first port is connected to the first-valve second port. The valve elements also include a second valve element having a second-valve first port connected to the exhaust port and a second-valve second port, and wherein in a second-valve actuated state, the second-valve first port is connected to the second-valve second port and in a second-valve unactuated state, the second-valve first port is disconnected from the second-valve second port. Also, the valve elements of the valve unit comprise a third valve element having a third-valve first port connected to the second-valve second port and a third-valve second port, and wherein in a third-valve actuated state, the third-valve first port is disconnected from the third-valve second port and in a third-valve unactuated state, the third-valve first port is connected to the third-valve second port. The valve elements of the valve unit also comprise a fourth valve element having a fourth-valve first port connected to the third-valve second port and a fourth-valve second port connected to the first-valve second port, and wherein in a fourth-valve actuated state, the fourth-valve first port is connected to the fourth-valve second port and in a fourth-valve unactuated state, the fourth-valve first port is disconnected from the fourth-valve second port.

Thus, the four valve elements have a respective actuated and a respective unactuated operational state and the connection between the respective ports of the corresponding valve elements are described above, in dependence on the current operational state, i.e. the actuated state or unactuated state.

In a development, in the pneumatic operation mode, the first valve element and the second valve element are configured to operate in the actuated state upon receipt of the pneumatic lower signal, and the third valve element and the fourth valve element are configured to operate in the actuated state upon receipt of the pneumatic lift signal.

Furthermore, in another development, in the mechanic operation mode, the first valve element and the second valve element are configured to operate in the actuated state upon receipt of the mechanic lower signal, and the third valve element and the fourth valve element are configured to operate in the actuated state upon receipt of the mechanical lift signal.

Preferably, in a development, the valve elements are a 2/2-way valves, i.e. a valve with two ports and two operational states.

More preferably, the mechanical control input interface comprises a shaft and a plurality of cams, each associated to a respective valve element, and wherein each valve element comprises a tappet that is configured to be actuated by a respective cam to operate the respective valve element in the corresponding actuated state. Preferably, turning the shaft, in particular around a longitudinal axis, causes the cams, which are placed at respective different positions along the shaft, to also turn around the longitudinal directions. When a given cam is oriented towards the corresponding tappet, the tappet is actuated and moved in a radial direction away from the shaft. Thus, by turning the shaft by a respective different angular amount, the valve elements can be mechanically actuated. The shaft is, in a particular embodiment, attached to a manual actuator, such as, for example a lever or a handle or any other suitable actuator, that can be manually or mechanically actuated and which is connected to the shaft and causes it to turn upon actuation.

In another development, which may include any of the technical features described above, the electrical control input unit comprises a fifth valve element having a fifth-valve first port for providing a first pneumatic control signal, in particular the pneumatic lift signal, a fifth-valve second port connected to the input port and a fifth-valve third port, connected to the exhaust port, wherein in a fifth-valve actuated state, the fifth-valve first port is connected to the fifth-valve second port and in a fifth-valve unactuated state, the fifth-valve first port is connected to the fifth-valve third port, and wherein the operation in the fifth-valve actuated state or the fifth-valve unactuated state depends on a reception of a first electrical input signal, in particular an electrical lift signal. Additionally, the electrical control input unit comprises a sixth valve element having a sixth-valve first port for providing a second pneumatic control signal, in particular the pneumatic lower signal, a sixth-valve second port connected to the input port and a sixth-valve third port, connected to the exhaust port, wherein in a sixth-valve actuated state, the sixth-valve first port is connected to the sixth-valve second port and in a sixth-valve unactuated state, the sixth-valve first port is connected to the sixth-valve third port, and wherein the operation in the sixth-valve actuated state or the sixth-valve unactuated state depends on a reception of a second electrical input signal, in particular an electrical lower signal. The electrical control input signal of this development provides a simple way of transforming the electrical input signals, in particular the electrical lift signal and the electrical lower signal into the corresponding pneumatic control signal, namely the pneumatic lift signal and the pneumatic lower signal for actuating or controlling the valve unit pneumatically.

Preferably, in a development, the fifth valve element and the sixth valve element are electrically controlled solenoid valves, in particular electrically controlled 3/2-way solenoid valves, each having three ports and two operational states, and wherein the operational states are controlled based on electrical signals.

In a development, the electrical control input unit is configured to receive compressed air directly from the compressed air supply device. Alternatively, in another development the electrical control input unit further comprises a compressed-air reservoir that is pneumatically connected to the input port, in particular via a non-return valve arranged and configured to prevent a flow from the compressed-air reservoir to the input port, and further connected to both the fifth-valve second port and to the sixth-valve second port.

The valve device of the first aspect is an operation element for an air suspension system which facilitates flow within an air suspension height control device, such as an air-bellow, which can be both manually and/or pneumatically actuated.

The realization of the valve device, which opens (normally closed type) or closes the flow (normally open type), within a trailer air suspension height control device is done by means of valve unit in the form of a special piston set, which can be actuated mechanically (e.g. manually) or pneumatically, by means of pneumatic signals provided in response to electrical signals. In applications where manual operation is necessary (e. g., trailer air suspension control (TASC) type devices) the valve device is the same as in applications where pneumatic operation is necessary (e. g., electronically controlled air suspension (ECAS) type or electronic trailer air suspension control (eTASC) type devices). Together with a normally closed valve there may be balancer, which significantly reduces the influence of the pressure (at the valve's input or output port) on the force necessary to actuate it mechanically.

The valve device has a simple design since the valve unit is controlled mechanically and pneumatically, and not electrically, which has a direct impact on the production costs. Further, a scale effect is achieved, due to the fact that the same design is used for mechanical actuation application (e.g., TASC type devices), for pneumatic actuation application (e.g., ECAS type devices) and for both pneumatic and mechanical actuation application (e.g., eTASC type devices). Additionally, it can also be used in other applications, other than air suspension systems, which need similar functions.

According to a second aspect of the invention, an electrically controllable air suspension system for a commercial vehicle is disclosed. The electrically controllable air suspension system, for instance a ECAS, comprises a valve device according to the first aspect of the present invention, a compressed air supply unit (e.g., a compressor) for supplying compressed air to the input port of the valve device, an air bellow connected to the output port of the valve device, and an electronic control unit signally connected to the electrical control input unit and configured to provide the electrical input signals, in particular the electrical lift signal and the electrical lower signal for electrically operating the flow control unit. The electrically controllable air suspension system according to the invention thus shares the advantages of the valve device of the first aspect.

A third aspect of the invention is formed by a mechanically controllable air suspension system (e.g., TASC) for a commercial vehicle. The mechanically controllable air suspension system comprises a valve device according to the first aspect, a compressed air supply unit for supplying compressed air to the input port of the valve device, an air bellow connected to the output port of the valve device, and a mechanical actuator connected to the mechanical control input interface and configured to provide the mechanical input signal for mechanically operating the flow control unit.

A fourth aspect of the present invention is formed by a mechanically and electrically controllable air suspension system (e.g., eTASC) for a commercial vehicle. The air suspension system of the fourth aspect comprises a valve device according to the first aspect of the invention, a compressed air supply unit for supplying compressed air to the input port of the valve device, an air bellow connected to the output port of the valve device, a mechanical actuator connected to the mechanical control input interface and configured to provide the mechanical input signal for mechanically operating the flow control unit, and an electronic control unit signally connected to the electrical control input unit and configured to provide the electrical input signals, in particular the electrical lift signal and the electrical lower signal for electrically operating the flow control unit.

A fifth aspect of the invention is formed by a commercial vehicle comprising an electrically controllable air suspension system according to the second aspect, or a mechanically controllable air suspension system according to the third aspect, or a mechanically and electrically controllable air suspension system according to the fourth aspect.

The commercial vehicle of the fifth aspect thus shares the advantages of the valve device of the first aspect of the invention or of any of its embodiments.

These and other aspects of the invention will be apparent from and elucidated with reference to the embodiments described hereinafter.

The embodiments of the invention are described in the following on the basis of the drawing in comparison with the state of the art, which is also partly illustrated. The latter is not necessarily intended to represent the embodiments to scale. The drawing is, where useful for explanation, shown in schematized and/or slightly distorted form. With regard to additions to the teaching immediately recognizable from the drawing, reference is made to the relevant prior art. It should be kept in mind that numerous modifications and changes can be made to the form and detail of an embodiment without deviating from the general concept of the invention. The features of the invention disclosed in the description, in the drawing and in the claims may be essential for a further development of the invention, either individually or in any combination. In addition, all combinations of at least two of the features disclosed in the description, drawing and/or claims fall within the scope of the invention.

The general concept of the invention is not limited to the exact form or detail of the preferred embodiments shown and described below or to a subject matter, which would be limited in comparison to the subject matter as claimed in the claims.

For specified design ranges, values within specified limits of the ranges are also disclosed as limit values and thus are arbitrarily applicable and claimable.

The following drawing shows in:
- Fig. 1: a schematic block diagram of a valve device in accordance with a first embodiment of the invention, implemented in an air suspension system, also in accordance with the invention;
- Fig. 2: a schematic block diagram of a valve device in accordance with a second embodiment of the invention;
- Fig. 3: a cross-sectional view of a valve element that can be implemented in a valve device in accordance with the invention;
- Fig. 4: a schematic block diagram of an exemplary electrical control unit that can be implemented in a valve device in accordance with a third embodiment of the invention;
- Fig. 5: a schematic block diagram of an alternative exemplary electrical control unit that can be implemented in a valve device in accordance with a fourth embodiment of the invention:
- Fig. 6: a schematic block diagram of a valve device in accordance with a fifth embodiment of the invention; and
- Fig. 7: shows a schematic pneumatic diagram of a valve device in accordance with a further embodiment of the invention;
- Fig. 8: a schematic block diagram of a commercial vehicle including an air suspension system in accordance with an embodiment of the invention.

Throughout the following description of the figures, the same reference numbers will be used to refer to those technical features having an identical or a similar function.

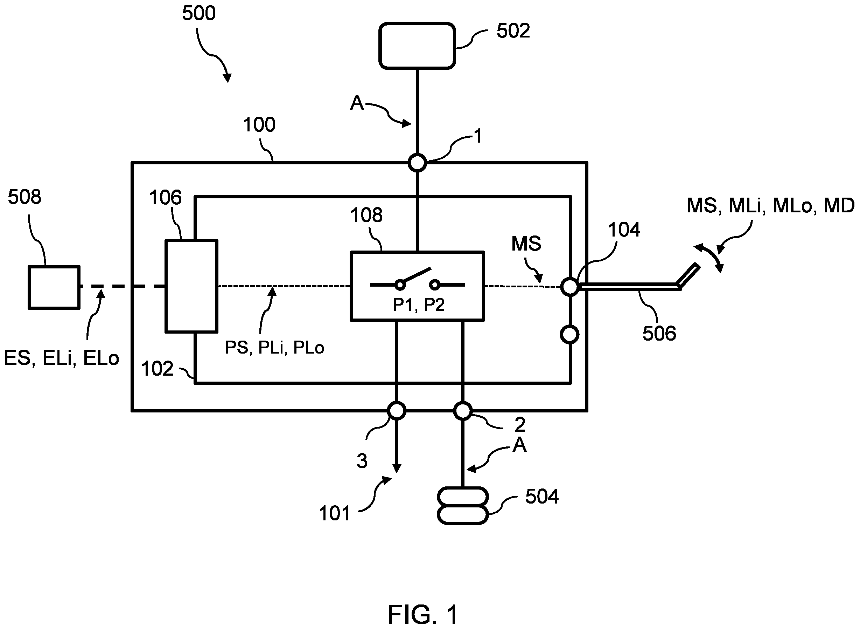

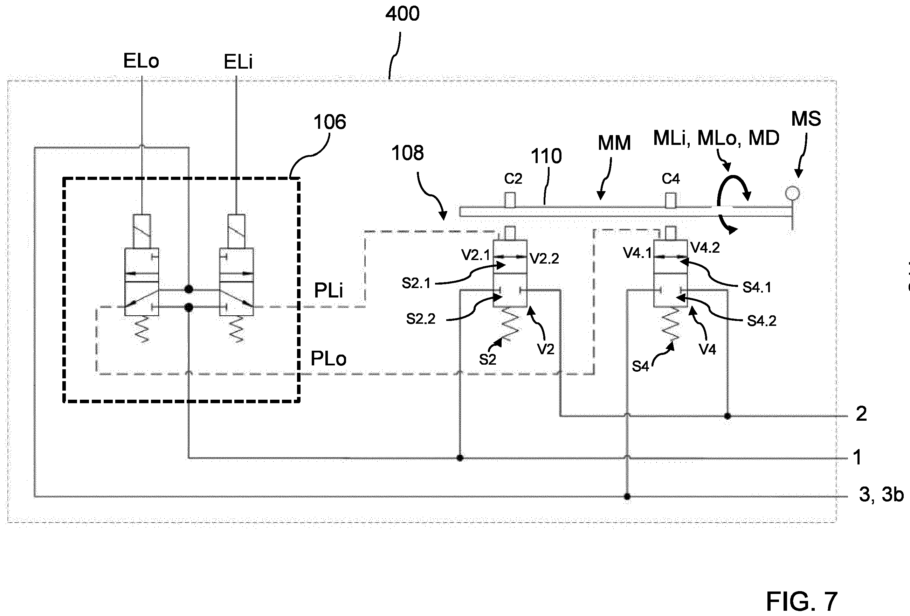

Fig. 1 shows a schematic block diagram of a valve device 100 in accordance with a first embodiment of the invention. The valve device 100 can be implemented as part of an air-suspension system 500, 500a, 500b of a commercial vehicle 1000, as it will be discussed with reference to Fig. 7 below. The valve device 100 comprises an input port 1 that is adapted for establishing a pneumatic connection with an external (i.e., not part of the valve device 100) compressed air supply unit 502. The input port is arranged and configured to receive compressed air A from the compressed air supply unit 502, which can be, for example, a compressor or a compressed-air reservoir. The valve device 100 also comprises an output port that is adapted to be pneumatically connection to an air bellow 504 or to an air-bellow arrangement comprising a plurality of air bellows. The output port is arranged and configured to provide compressed air A to the air bellow 504. Further, the valve device comprises an exhaust port configured to exhaust compressed air to an environment 101.

The valve device 100 also comprises a flow control unit 102 that is arranged and configured to control a flow of compressed air between the input port and the output port and between the output port and the exhaust port. The flow control unit 102 comprises both a mechanical control input interface 104 and an electrical control input unit 106 that are configured to receive, respectively, the electrical input signals ES and the mechanical control signals MS. These signals are provided externally to control the operation of the valve device 100. The mechanical control input interface 104 is adapted for a mechanical connection to a mechanical actuator 506, such as a lever or a handle or a console, that can be manually or mechanically actuated and is configured to receive a mechanical input signal MS for mechanically controlling the flow control unit 102. The electrical control input unit 106 is adapted for an electrical connection to an external electronic control unit 508 and configured to receive an electrical input signal ES from the electronic control unit 508 for electrically controlling the flow control unit 102.

The valve device further comprises a valve unit 108 that is configured to control i.e., to establish or to interrupt, a respective pneumatic connection between the input port 1 and the output port 2, labelled as P1, and between the output port 2 and the exhaust port 3, labelled as P2. The control is performed in dependence on the mechanical input signal MS and the electrical input signal ES.

In particular, in the exemplary valve device 100 of Fig. 1, the electrical control input unit 106 is configured to receive, as electrical input signals ES, an electrical lift signal ELi indicative of an instruction to fill the air bellow 504 with compressed air A, i.e. to enable the connection P1 between input port 1 connected to the compressed air supply 502 and the output port 2 connected to the air bellow 504, and an electrical lower signal ELo indicative of an instruction to exhaust the compressed air A from the air bellow 504, i.e., to enable the connection P2 between the output port 2 connected to the air bellow 504 and the exhaust port 3. The electrical control input unit 106 is also configured to provide, as pneumatic control signal PS, a pneumatic lift signal PLi or a pneumatic lower signal PLo, respectively, to the valve unit 108 in dependence of which signal ELi or Elo has been received. Upon receipt of the pneumatic lift signal PLi at the valve unit 108, the valve unit 108 is configured to establish the pneumatic connection P1 between the input port 1 and the output port 2 and to interrupt the pneumatic connection P2 between the output port 2 and the exhaust port 3. On the other hand, upon receipt of the pneumatic lower signal PLo at the valve unit 108, the valve unit 108 is configured to establish the pneumatic connection P2 between the output port 2 and the exhaust port 3 and to interrupt the pneumatic connection P1 between the input port 1 and the output port 2. Additionally, when no electrical input signal ES is received at the electrical control input unit 106, no pneumatic control signal is provided to the valve unit 108. In this case, the valve unit 108 is configured to interrupt the pneumatic connections P1, P2 between the input port 1 and the output port 2 and between the output port 2 and the exhaust port 3. This maintains the pressure in the air bellow since no compressed air is from the compressed air supply 502 is provided and no compressed air from the air bellow 504 is exhausted.

Additionally, in the exemplary valve device 100 of Fig. 1, the mechanical control input interface 104 is configured to receive, as mechanical input signals MS, a mechanical lift signal MLi indicative of an instruction to fill the air bellow 504 with compressed air A, a mechanical lower signal MLo indicative of an instruction to exhaust the compressed air A from the air bellow 504, and a mechanical drive signal MD, and to provide or forward the respective mechanical lift signal MLi or the mechanical lower signal MLo or the mechanical drive signal MD to the valve unit 108. Upon receipt of the mechanical lift signal MLi at the valve unit 108, the valve unit 108 is configured to establish the pneumatic connection P1 between the input port 1 and the output port 2 and to interrupt the pneumatic connection P2 between the output port 2 and the exhaust port 3. Upon receipt of the mechanical lower signal at the valve unit 108, the valve unit 108 is configured to establish the pneumatic connection P2 between the output port 2 and the exhaust port 3 and to interrupt the pneumatic connection P1 between the input port 1 and the output port 3. Also, upon receipt of the mechanical drive signal MD, the valve unit 108 is configured to interrupt the pneumatic connections P1, P2 between the input port 1 and the output port 2 and between the output port 2 and the exhaust port 3. This maintains the pressure in the air bellow since no compressed air is from the compressed air supply 502 is provided and no compressed air from the air bellow 504 is exhausted.

According to the invention, the electrical control input unit 106 is configured to receive the electrical input signal ES from the electronic control unit 508, and to provide a pneumatic control signal PS for pneumatically controlling the valve unit 108. Therefore, the valve unit is actuated by means of mechanical and pneumatic signals and not by the use of electrical signals, which simplifies the production of the valve unit and also increases its reliability while reducing production costs.

The air suspension system 500 can therefore be controlled both electrically using the electronic control unit 508 and the electrical control signals ES and mechanically using the mechanical actuator 506 and the mechanical input signals MS. However, the same valve device 100 can be implemented in air suspension systems that are solely mechanically or manually controllable (e.g. TASC) or in air suspension systems that are solely electrically controllable (e.g. ECAS).

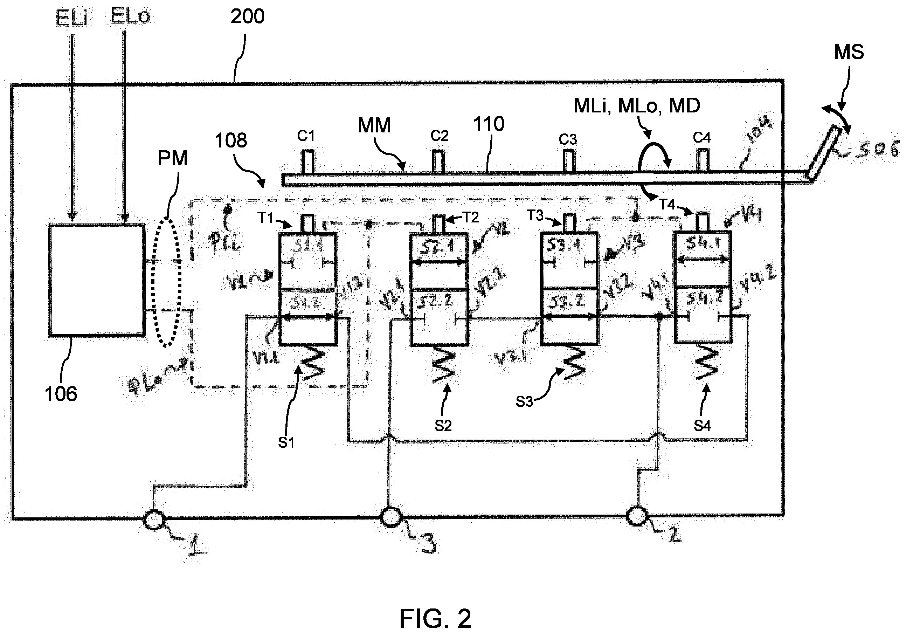

Fig. 2 shows a schematic block diagram of a valve device 200 in accordance with a second embodiment of the invention. In the valve device 200 of Fig. 2, wherein the valve unit 108 comprises a plurality of valve elements V1, V2, V3, V4, each having a pneumatic operation mode PM and a mechanic operation mode MM. The pneumatic operation mode PM is an operation mode of the valve elements that is governed by a pneumatic control signal (e.g., PLo, PLi) provided by the electrical control input unit 106 in response to the reception of a corresponding electrical input signal (e.g. ELi, ELo) and the mechanic operation mode MM governed by a mechanic control signal provided via the mechanical control input interface 104. In this particular example, the mechanical control input interface comprises a shaft 110 and a plurality of cams C1, C2, C3, C4, each associated with a respective valve element V1, V2, V3, V4. The shaft 110 is connected to a mechanical actuator 506. Actuating the mechanical actuator 506 causes the shaft to turn, e.g. around a longitudinal axis, changing the orientation of the cams C1, C2, C3, C4, which also rotate with the shaft 110. The cams can be configured as protrusions that extend radially outwards from the shaft.

The valve elements of the valve unit 108 of the valve device 200 of Fig. 2 include a first valve element V1 having a first-valve first port V1.1 connected to the input port 1 and a first-valve second port V1.2. In a first-valve actuated state S1.1, the first-valve first port V1.1 is disconnected from the first-valve second port V1.2 and in a first-valve unactuated state S1.2, the first-valve first port V1.1 is connected to the first-valve second port V1.2.

The valve unit 108 also includes a second valve element V2 having a second-valve first port V2.1 connected to the exhaust port 3 and a second-valve second port V2.2.ln a second-valve actuated state S2.1, the second-valve first port V2.1 is connected to the second-valve second port V2.2 and in a second-valve unactuated state S2.2, the second-valve first port V2.1 is disconnected from the second-valve second port V2.2.

The valve unit 108 further includes a third valve element V3 having a third-valve first port V3.1 connected to the second-valve second port V2.2 and a third-valve second port V1.2. In a third-valve actuated state S3.1, the third-valve first port V3.1 is disconnected from the third-valve second port V3.2 and in a third-valve unactuated state S3.2, the third-valve first port V3.1 is connected to the third-valve second port V3.2.

Finally, the valve unit also includes a fourth valve element V4 having a fourth-valve first port V4.1 connected to the third-valve second port V3.2 and a fourth-valve second port V1.2 connected to the first-valve second port V1.2. In a fourth-valve actuated state S4.1, the fourth-valve first port V4.1 is connected to the fourth-valve second port V4.2 and in a fourth-valve unactuated state S4.2, the fourth-valve first port V4.1 is disconnected from the fourth-valve second port V4.2.

As exemplarily shown in Fig. 2, in the pneumatic operation mode PM, the first valve element V1 and the second valve element V2 are configured to operate in the actuated state upon receipt of the pneumatic lower signal PLo. Conversely, the third valve element V3 and the fourth valve element V4 are configured to operate in the actuated state upon receipt of the pneumatic lift signal PLi. Thus, when the pneumatic lower signal PLo is received, the first valve element V1 changes to an actuated state S1.1 where the valve is closed (no connection between its ports is established), the second valve element V2 changes to an actuated state S2.1 where the valve is open (connection between its ports is established), the third valve element V3 remains in the unactuated state S3.2 where the valve is open and the fourth valve element V4 remains in the unactuated state S4.2 where the valve is closed. This establishes a pneumatic connection between the output port 2 and the exhaust port 3 and interrupts a pneumatic connection between the input port 1 and the output port 2, such that, when implemented in an air suspension system, this causes the compressed air located in the air bellow to exhaust, thereby lowering the chassis of the vehicle relative to the axle.

On the other hand, when the pneumatic lift signal PLi is received, the first valve element V1 stays in an unactuated state S1.2 where the valve is open (a connection between its ports is established), the second valve element V2 stays in an unactuated state S2.2 where the valve is closed (no connection between its ports is established), the third valve element V3 changes to an actuated state S3.1 where the valve is closed and the fourth valve element V4 changes to an actuated state S4.1 where the valve is open. This establishes a pneumatic connection between the input port 1 and the output port 2 and interrupts a pneumatic connection between the output port 2 and the exhaust port 3 such that, when implemented in an air suspension system, this causes a provision of compressed air from the compressed air supply to the air bellow, thereby lifting the chassis of the vehicle relative to the axle.

When no pneumatic signal PLi or PLo is received, all valve elements V1, V2, V3 and V4 are in the unactuated state and both pneumatic connections (i.e., between the input port and the output port and between the output port and the exhaust port) are interrupted.

Preferably, and in order to increase the simplicity of the valve unit, the valve elements comprise 2/2-way valves. More preferably, as shown in Fig. 2 the valve elements V1, V2, V3 and V4 are actuated against a force exerted by a respective spring element S1, S2, S3 and S4. The first valve element V1 and the third valve element V3 are thus normally open valves, where a pneumatic connection between the ports is established in the unactuated state, and actuating the valve closes or interrupts this pneumatic connection. The second valve element V2 and the fourth valve element V4 are thus normally closed valves, where a pneumatic connection between the ports is interrupted in the unactuated state, and actuating the valve establishes or opens this pneumatic connection.

Similarly, in the mechanic operation mode MM, the first valve element V1 and the second valve element V2 are configured to operate in the actuated state upon receipt of the mechanic lower signal MLo, and the third valve element V3 and the fourth valve element V4 are configured to operate in the actuated state upon receipt of the mechanical lift signal MLi.

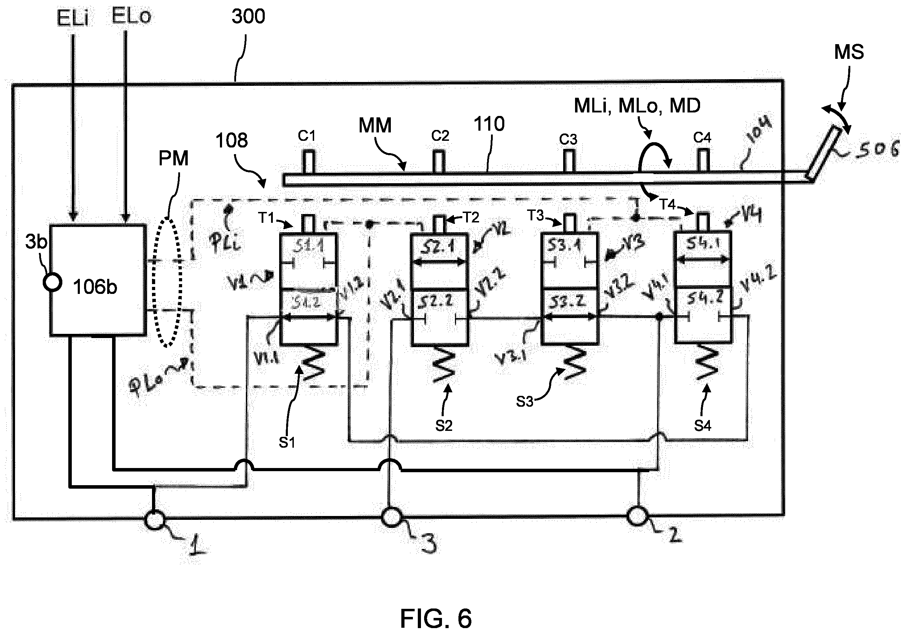

For the mechanic operation mode MM of the valve device 200 of Fig. 2, each of the cams C1, C2, C3 and C4 is associated with a respective valve element V1, V2, V3, V4, and each valve element V1, V2, V3, V4 comprises a tappet T1, T2, T3, T4 that is configured to be actuated by a respective cam C1, C2, C3, C4 to operate the respective valve element V1, V2, V3, V4 in the corresponding actuated state S1.1, S2.1, S3.1, S4.1. In Fig. 2 (and also in Fig. 6), all cams are visible for the sake of clarity. However, the cams will be arranged in such a way that they interact with the respective tappets T1, T2, T3 and T4 as indicated above. Operating the actuator causes the shaft to turn. When cams C1 and C2 simultaneously actuate on tappets T1 and T2 and cams C3 and C4 do not actuate on tappets T3 and T4, this is considered, in this example, as the mechanic lower signal MLo, which causes the valve unit 108 to establish a pneumatic connection between the output port and the exhaust port, as explained above with regard to the pneumatic lower signal PLo. When cams C3 and C4 simultaneously actuate on tappets T3 and T4 and cams C1 and C2 do not actuate on tappets T1 and T2, this is considered, in this example, as the mechanical lift signal MLi, which causes the valve unit 108 to establish a pneumatic connection between the input port and the output port, as explained above with regard to the pneumatic lift signal PLi.

Thus, the valve unit 108 can be implemented in air suspension systems that are electrically and/or mechanically actuated.

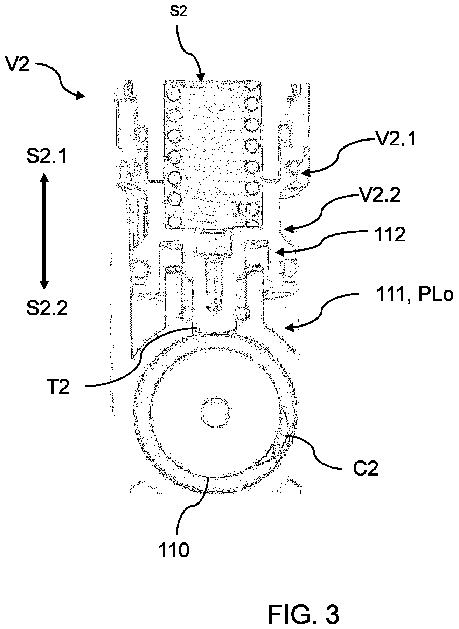

Fig. 3 shows a cross-sectional view of a valve element (e.g. V2) that can be implemented in a valve device, such as valve device 100 of Fig. 1 or valve device 200 of Fig. 2. The valve element V2 shown in Fig. 3 comprises a tappet T2 that is configured to be actuated by a respective cam C2 to mechanically operate the valve element V2. The cam is attached to the shaft, such that when the shaft is rotated to a given position (in the case shown in Fig. 3, when it is rotated ca. 60° in the counterclockwise direction from the position shown in the Fig. 3, it actuates on the tappet T2, which is forced to move upwards against the force exerted by the spring element S2 enabling a pneumatic connection between the ports V2.1 and V2.2, i.e. shifting the operational state of the valve element from an unactuated state S2.2 to the actuated state S2.1.

In the pneumatic operation mode PM, the pneumatic lower signal PLo is provided to a control chamber 111 where a pressure builds that drives a piston 112 of the valve element V2 against the force exerted by the spring element S2 thereby enabling a pneumatic connection between the ports V2.1 and V2.2. Similar principles apply to valve element V4. In the case of valve elements V1 and V2, in the unactuated state, the pneumatic connection between the ports is enabled and it is closed when the respective valve element is actuated, either mechanically via the cam and the tappet or pneumatically via pressurization of the control chamber.

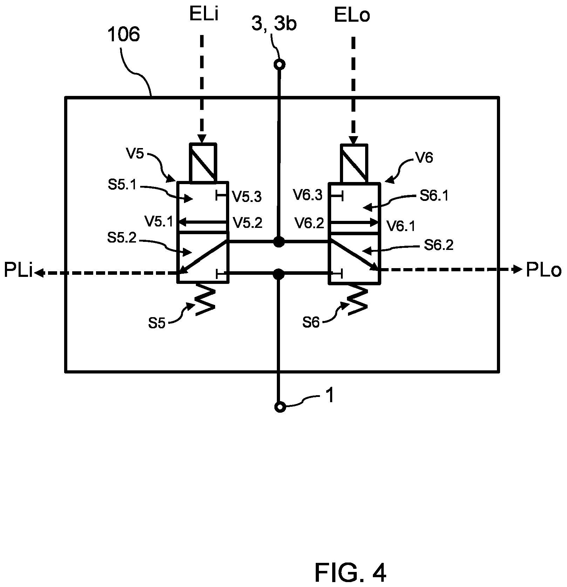

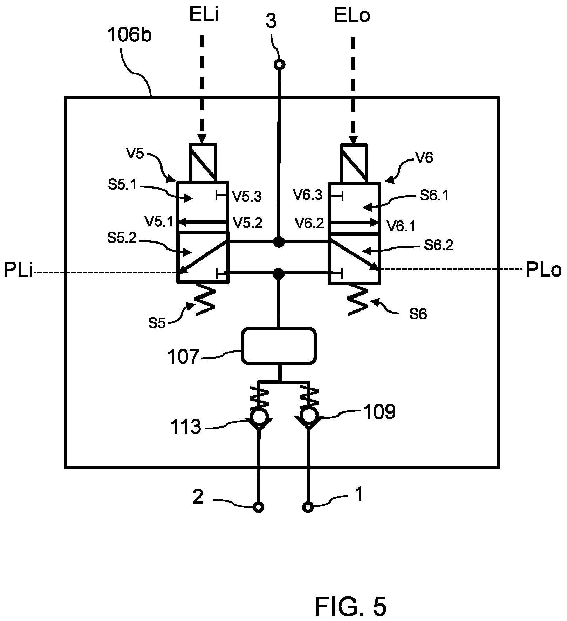

The discussion now turns to exemplary implementations of the electrical control input unit. Fig. 4 shows a schematic block diagram of an exemplary electrical control unit 106 that can be implemented in a valve device in accordance with a fourth embodiment of the invention. The electrical control input unit 106 of Fig. 5 comprises a fifth valve element V5 having a fifth-valve first port V5.1 for providing a first pneumatic control signal (e.g. the pneumatic lift signal), a fifth-valve second port V5.2 connected to the input port 1 and a fifth-valve third port V5.3, connected to an exhaust port 3, 3b, that can be, but is not necessarily the same exhaust port of the valve device described with reference to Fig. 1. In a fifth-valve actuated state S5.1, the fifth-valve first port V5.1 is connected to the fifth-valve second port V5.2 and in a fifth-valve unactuated state S5.2, the fifth-valve first port V5.1 is connected to the fifth-valve third port V5.3. Further, the operation in the fifth-valve actuated state or the fifth-valve unactuated state depends on a reception of a first electrical input signal, in particular an electrical lift signal ELi. When the electrical lift signal ELi is received, the fifth valve is actuated and the pneumatic lift signal PLi is provided via the fifth-valve first port V5.1 to pneumatically actuate the valve unit 108 (e.g. the third valve element V3 and the fourth valve element V4).

The electrical control input unit also comprises a sixth valve element V6 having a sixth-valve first port V6.1 for providing a second pneumatic control signal, in particular the pneumatic lower signal PLo, a sixth-valve second port V6.2 connected to the input port 1 and a sixth-valve third port V6.3, connected to the exhaust port 3, 3b, which again, is not necessarily the same exhaust port shown in Fig. 1. In a sixth-valve actuated state S6.1, the sixth-valve first port V6.1 is connected to the sixth-valve second port V6.2 and in a sixth-valve unactuated state S6.2, the sixth-valve first port V6.1 is connected to the sixth-valve third port V6.3. Further, the operation in the sixth-valve actuated state or the sixth-valve unactuated state depends on a reception of a second electrical input signal, in particular an electrical lower signal ELo. When the electrical lower signal ELo is received, the sixth valve is actuated and the pneumatic lower signal PLo is provided via the sixth-valve first port V6.1 to pneumatically actuate the valve unit 108 (e.g. the first valve element V1 and the second valve element V2).

Preferably, the fifth valve element V5 and the sixth valve element V6 are electrically controlled solenoid valves, in particular electrically controlled 3/2-way solenoid valves.

Fig. 5 shows a schematic block diagram of an alternative exemplary electrical control unit 106b. In the following, the discussion will mainly focus on technical features distinguishing the electrical control unit 106 of Fig. 4 from the electrical control unit 106b of Fig. 5. The electrical control input unit 106b additionally comprises a compressed-air reservoir 107 that is pneumatically connected to the input port 1, in particular via a non-return valve 109 that is arranged and configured to prevent a flow from the compressed-air reservoir 107 to the input port 1. The compressed-air reservoir is further connected to both the fifth-valve second port V5.2 and to the sixth-valve second port V6.2. Preferably, the compressed-air reservoir is also connected to the output port via a second non-return valve 113 that is arranged and configured to prevent a flow from the compressed-air reservoir 107 to the output port 2.

Fig. 6 shows a schematic block diagram of a valve device 300 in accordance with a fifth embodiment of the invention, that includes the electrical control unit 106 of Fig. 5. For the description of the operation of the valve unit 108 in any one of the pneumatic operation mode PM and the mechanical operation mode MM, the reader is kindly referred to the description of Fig. 2 and 3. In the valve device 300 of Fig. 6, the input port 1 and the output port 2 are connected, via a respective non-return valve (see Fig. 5) to the compressed-air reservoir 107. The compressed-air reservoir (see Fig. 5) can be implemented as a microvessel and it can be filled using compressed air provided directly by the compressed air supply 502 during while the air bellows 504 are being filled with compressed air from the bellows 504 during exhaust, when the pressure is enough to overcome the force exerted by an spring element of the respective non return valve 109, 113.

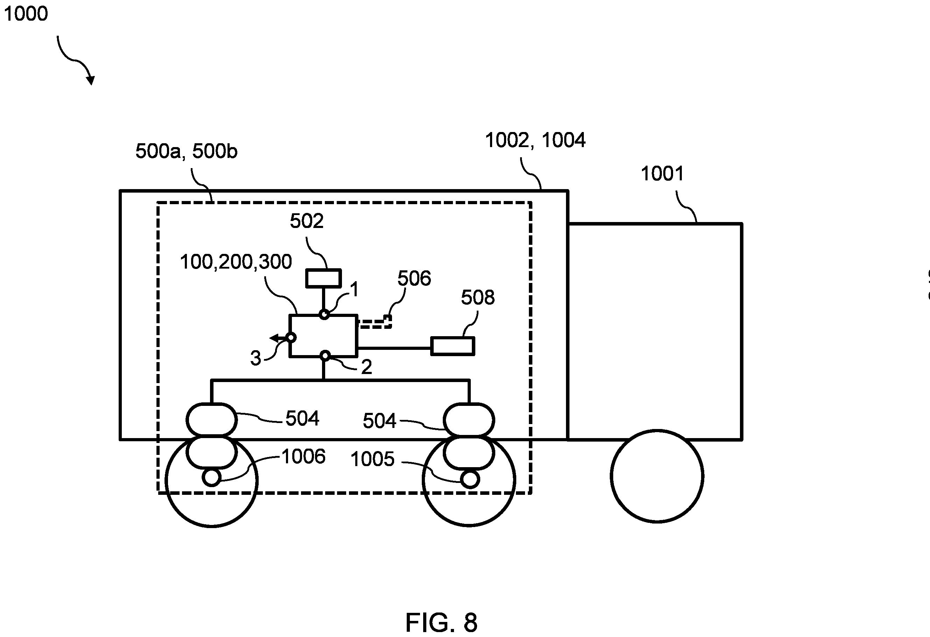

Fig. 7 shows a schematic pneumatic diagram of a valve device 400 in accordance with a further embodiment of the invention. The valve device 400 includes an electrical control input unit 106, such as the one described with reference to Fig. 4 (or Fig. 5) above, and a valve unit 108. In the exemplary valve device 400 of Fig. 8, the valve unit comprises two valve elements, labelled as V2 and V4 in Fig. 8. For a detailed explanation of the function of the valve elements V2 and V4 reference is made to the discussion of the valve devices of Figs. 2 and 6 above. Valve element V2 can be actuated (i.e., operated in the actuated state V2.1) by the provision of the pneumatic lift signal PLi, provided by the electrical input control unit 106 in response to the reception of an electrical lift signal ELi. This causes a pneumatic connection between input port 1 and the output port 2, and thus enables the provision of compressed air from the input port 1 to the output port 2 where the bellows are connected. Valve element V4 can be actuated i.e., operated in the actuated state V4.1, by the provision of the pneumatic lower signal PLo, provided by the electrical input control unit 106 in response to the reception of an electrical lower signal ELo. This causes a pneumatic connection between output port 2 and the exhaust port 3, which enables the venting of the air accumulated in the bellows.

Conversely, the valve elements V2 and V4 can also be actuated mechanically by actuating the shaft 110 in a mechanical operation mode MM for providing the mechanical control signals MS, for example via the corresponding cams C2, C4, as explained above with reference to Figs. 2, 3 and 6. Cam C2 is configured to actuate valve V2 via a mechanical lift signal MLi for enabling a provision of compressed air from the input port 1 to the output port 2. Cam C4 is configured to actuate valve V4 via a mechanical lower signal MLo for enabling a venting of compressed air from the bellows via the output port 2 to the exhaust port 2.

Fig. 8 shows a schematic block diagram of a commercial vehicle 1000 that includes an air suspension system 500a, 500b that can mechanically and/or electrically controllable. The vehicle 1000 includes a cabin 1001 and a trailer 1002. An air suspension system includes air bellows 504 that are connected to a chassis 1004 and to a respective axle, such as a front axle 1005 and a rear axle 1006. When the air bellows are filled with air, a distance between the chassis 1004 and the axle increases, i.e. the chassis lifts, and when the air in the bellows 504 is exhausted, a distance between the chassis and the axle decreases, i.e. the chassis lowers.

An electrically controllable air suspension system 500a comprises a valve device 100, 200, 300, a compressed air supply unit, e.g. a compressor, 502 for supplying compressed air A to the input port of the valve device 100, 200, 300, air bellows 504 connected to the chassis 1004 and to an axle 1005, 1006 and pneumatically connected to the output port 2 of the valve device 100, 200, 300 and an electronic control unit 508 signally connected to the electrical control input unit 106 and configured to provide the electrical input signals ES, in particular the electrical lift signal ELi and the electrical lower signal ELo for electrically operating the flow control unit 102.

A mechanically controllable air suspension system 500b comprises a valve device 100, 200, 300, a compressed air supply unit 502 for supplying compressed air A to the input port of the valve device 100, 200, 300, air bellow or bellows 504 connected to the output port 2 of the valve device and a mechanical actuator connected to the mechanical control input interface 104 and configured to provide the mechanical input signal MS for mechanically operating the flow control unit 102.

An electrically and mechanically controllable air suspension system comprises both an electronic control unit 508 and a mechanical actuator 506 as described above.

In summary, the invention is directed to a valve device for an air-suspension system that comprises an input port for receiving compressed air, an output port for providing compressed air to an air bellow and an exhaust port. It comprises a flow control unit with a mechanical control input interface for receiving a mechanical input signal for mechanically controlling the flow control unit and an electrical control input unit for receiving an electrical input signal for electrically controlling the flow control unit. A valve unit is configured to control a respective pneumatic connection in dependence on the mechanical input signal and the electrical input signal. The electrical control input unit is configured to receive the electrical input signal and to provide a pneumatic control signal for pneumatically controlling the valve unit.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### List of reference signs (Part of the description)

- 1: input port
- 2: output port
- 3: exhaust port
- 3b: exhaust port
- 100: valve device
- 101: environment
- 102: flow control unit
- 104: mechanical control input interface
- 106: electrical control input unit
- 106b: electrical control input unit
- 107: compressed-air reservoir
- 108: valve unit
- 109: non-return valve
- 110: shaft
- 111: control chamber
- 112: piston
- 113: non-return valve
- 200: valve device
- 300: valve device
- 400: valve device
- 500: air-suspension system
- 500a: air-suspension system (electrically controlled)
- 500b: air-suspension system (mechanically controlled)
- 502: compressed air supply unit
- 504: air bellow
- 506: mechanical actuator
- 508: electronic control unit
- 1000: commercial vehicle
- 1001: cabin
- 1002: trailer
- 1004: chassis
- 1005: front axle
- 1006: rear axle
- A: compressed air
- Ci: iₜₕ cam (i=1... 4)
- ELi: electrical lift signal
- ELo: electrical lower signal
- ES: electrical input signals
- MD: mechanical drive signal
- MLi: mechanical lift signal
- MLo: mechanical lower signal
- MM: mechanic operation mode
- MS: mechanical control signals
- PLi: pneumatic lift signal
- PLo: pneumatic lower signal
- PM: pneumatic operation mode
- PS: pneumatic control signal
- Si.1: iₜₕ valve actuated state (i=1... 6)
- Si.2: iₜₕ valve unactuated state (i=1... 6)
- Si: i^{th} spring element (i=1... 4)
- Ti: i^{th} Tappet (i=1... 4)
- Vi: i^{th} valve element (i=1... 6)
- Vi.1: iₜₕ valve first port (i=1... 6)
- Vi.2: iₜₕ valve second port (i=1... 6)
- Vi.3: iₜₕ valve third port (i=5, 6)

## Claims

1. A valve device (100, 200, 300, 400) for an air-suspension system (500, 500a, 500b) of a commercial vehicle (1000), the valve device (100, 200, 300) comprising:
- an input port (1) adapted for a pneumatic connection to a compressed air supply unit (502) and configured to receive compressed air (A) from the compressed air supply unit (502);
- an output port (2) adapted for a pneumatic connection to an air bellow (504) and configured to provide compressed air (A) to the air bellow (504); and
- an exhaust port (3) for exhausting compressed air (A) to an environment (101);
- a flow control unit (102) comprising:
- a mechanical control input interface (104) adapted for a mechanical connection to a mechanical actuator (506) and configured to receive a mechanical input signal (MS) for mechanically controlling the flow control unit (102);
- an electrical control input unit (106, 106b) adapted for an electrical connection to an electronic control unit (508) and configured to receive an electrical input signal (ES) for electrically controlling the flow control unit (102); and
- a valve unit (108) configured to establish or to interrupt a respective pneumatic connection (P1, P2) between the input port (1) and the output port (2) and between the output port (2) and the exhaust port (3), in dependence on the mechanical input signal (MS) and the electrical input signal (ES);
**characterized in that**
the electrical control input unit (106) is configured to receive the electrical input signal (ES) and to provide a pneumatic control signal (PS) for pneumatically controlling the valve unit (108).

2. The valve device (100, 200, 300, 400) of claim 1,
- wherein the electrical control input unit (106) is configured to receive, as electrical input signals (ES), an electrical lift signal (ELi) indicative of an instruction to fill the air bellow (504) with compressed air (A), and an electrical lower signal (ELo) indicative of an instruction to exhaust the compressed air (A) from the air bellow (504), and to provide as pneumatic control signal (PS) a pneumatic lift signal (PLi) or a pneumatic lower signal (PLo) respectively to the valve unit (108) in dependence thereof; and
- wherein, upon receipt of the pneumatic lift signal (PLi), the valve unit (108) is configured to establish the pneumatic connection (P1) between the input port (1) and the output port (2) and to interrupt the pneumatic connection (P2) between the output port (2) and the exhaust port (3), and
- wherein, upon receipt of the pneumatic lower signal (PLo), the valve unit (108) is configured to establish the pneumatic connection (P2) between the output port (2) and the exhaust port (3) and to interrupt the pneumatic connection (P1) between the input port (1) and the output port (2), and
- wherein, when no electrical input signal (ES) is received, the valve unit (108) is configured to interrupt the pneumatic connections (P1, P2) between the input port (1) and the output port (2) and between the output port (2) and the exhaust port (3).

3. The valve device (100, 200, 300, 400) of claim 1 or 2,
- wherein the mechanical control input interface (104) is configured to receive, as mechanical input signals (MS),
- a mechanical lift signal (MLi) indicative of an instruction to fill the air bellow (504) with compressed air (A),
- a mechanical lower signal (MLo) indicative of an instruction to exhaust the compressed air (A) from the air bellow (504), and
- a mechanical drive signal (MD), and to provide the respective mechanical lift signal (MLi) or the mechanical lower signal (MLo) or the mechanical drive signal (MD) to the valve unit (108), and
- wherein, upon receipt of the mechanical lift signal (MLi), the valve unit (108) is configured to establish the pneumatic connection (P1) between the input port (1) and the output port (2) and to interrupt the pneumatic connection (P2) between the output port (2) and the exhaust port (3),
- wherein, upon receipt of the mechanical lower signal, the valve unit (108) is configured to establish the pneumatic connection (P2) between the output port (2) and the exhaust port (3) and to interrupt the pneumatic connection (P1) between the input port (1) and the output port (3), and
- wherein, upon receipt of the mechanical drive signal (MD), the valve unit (108) is configured to interrupt the pneumatic connections (P1, P2) between the input port (1) and the output port (2) and between the output port (2) and the exhaust port (3).

4. The valve device (200, 300) of any of the preceding claims, wherein the valve unit (108) comprises a plurality of valve elements (V1, V2, V3, V4) having a pneumatic operation mode (PM) governed by a pneumatic control signal (PLo, PLi) and a mechanic operation mode (MM) governed by a mechanic control signal (MLi, MLo, MD).

5. The valve device of claim 4, wherein the valve elements (V1, V2, V3, V4) include:
- a first valve element (V1) having a first-valve first port (V1.1) connected to the input port (1) and a first-valve second port (V1.2), and wherein in a first-valve actuated state (S1.1), the first-valve first port (V1.1) is disconnected from the first-valve second port (V1.2) and in a first-valve unactuated state (S1.2), the first-valve first port (V1.1) is connected to the first-valve second port (V1.2);
- a second valve element (V2) having a second-valve first port (V2.1) connected to the exhaust port (3) and a second-valve second port (V2.2), and wherein in a second-valve actuated state (S2.1), the second-valve first port (V2.1) is connected to the second-valve second port (V2.2) and in a second-valve unactuated state (S2.2), the second-valve first port (V2.1) is disconnected from the second-valve second port (V2.2);
- a third valve element (V3) having a third-valve first port (V3.1) connected to the second-valve second port (V2.2) and a third-valve second port (V1.2), and wherein in a third-valve actuated state (S3.1), the third-valve first port (V3.1) is disconnected from the third-valve second port (V3.2) and in a third-valve unactuated state (S3.2), the third-valve first port (V3.1) is connected to the third-valve second port (V3.2);
- a fourth valve element (V4) having a fourth-valve first port (V4.1) connected to the third-valve second port (V3.2) and a fourth-valve second port (V1.2) connected to the first-valve second port (V1.2), and wherein in a fourth-valve actuated state (S4.1), the fourth-valve first port (V4.1) is connected to the fourth-valve second port (V4.2) and in a fourth-valve unactuated state (S4.2), the fourth-valve first port (V4.1) is disconnected from the fourth-valve second port (V4.2).

6. The valve device (200, 300) of claim 4 or 5 wherein, in the pneumatic operation mode (PM), the or a first valve element (V1) and the or a second valve element (V2) are configured to operate in the actuated state upon receipt of the pneumatic lower signal (PLo), and the or a third valve element (V3) and the or a fourth valve element (V4) are configured to operate in the actuated state upon receipt of the pneumatic lift signal (PLi).

7. The valve device (200, 300) of any one of claims 4 to 6, wherein, in the mechanic operation mode (MM), the first valve element (V1) and the second valve element (V2) are configured to operate in their respective actuated state upon receipt of the mechanic lower signal (MLo), and the third valve element (V3) and the fourth valve element (V4) are configured to operate in their respective actuated state upon receipt of the mechanical lift signal (MLi).

8. The valve device (100, 200, 300) of any one of claims 4 to 7, wherein the mechanical control input interface (104) comprises a shaft (110) and a plurality of cams (C1, C2, C3, C4), each associated with a respective valve element (V1, V2, V3, V4), and wherein each valve element (V1, V2, V3, V4) comprises a tappet (T1, T2, T3, T4) that is configured to be actuated by a respective cam (C1, C2, C3, C4) to operate the respective valve element (V1, V2, V3, V4) in the corresponding actuated state (S1.1, S2.1, S3.1, S4.1).

9. The valve device (100, 200, 300) of any of the preceding claims, wherein the electrical control input unit (106) comprises:
- a fifth valve element (V5) having a fifth-valve first port (V5.1) for providing a first pneumatic control signal (PLi), in particular the pneumatic lift signal (PLi), a fifth-valve second port (V5.2) connected to the input port (1) and a fifth-valve third port (V5.3), connected to the exhaust port (3), wherein in a fifth-valve actuated state (S5.1), the fifth-valve first port (V5.1) is connected to the fifth-valve second port (V5.2) and in a fifth-valve unactuated state (S5.2), the fifth-valve first port (V5.1) is connected to the fifth-valve third port (V5.3), and wherein the operation in the fifth-valve actuated state (S5.1) or the fifth-valve unactuated state (S5.2) depends on a reception of a first electrical input signal (ES), in particular an electrical lift signal (ELi); and
- a sixth valve element (V6) having a sixth-valve first port (V6.1) for providing a second pneumatic control signal (PLo), in particular the pneumatic lower signal (PLo), a sixth-valve second port (V6.2) connected to the input port (1) and a sixth-valve third port (V6.3), connected to the exhaust port (3), wherein in a sixth-valve actuated state (S6.1), the sixth-valve first port (V6.1) is connected to the sixth-valve second port (V6.2) and in a sixth-valve unactuated state (S6.2), the sixth-valve first port (V6.1) is connected to the sixth-valve third port (V6.3), and wherein the operation in the sixth-valve actuated state (S6.1) or the sixth-valve unactuated state (S6.2) depends on a reception of a second electrical input signal (ES), in particular an electrical lower signal (ELo).

10. The valve device (100, 200, 300) of claim 9, wherein the fifth valve element (V5) and the sixth valve element (V6) are electrically controlled solenoid valves (V5, V6), in particular electrically controlled 3/2-way solenoid valves.

11. The valve device (100, 200, 300) of claim 9 or 10, wherein the electrical control input unit (106b) further comprises a compressed-air reservoir (107) pneumatically connected to the input port (1), in particular via a non-return valve (109) arranged and configured to prevent a flow from the compressed-air reservoir (107) to the input port (1), and further connected to both the fifth-valve second port (V5.2) and to the sixth-valve second port (V6.2).

12. An electrically controllable air suspension system (500a) for a commercial vehicle (1000a), the electrically controllable air suspension system (500a) comprising:
- a valve device (100, 200, 300) according to any one of claims 1 to 11,
- a compressed air supply unit (502) for supplying compressed air (A) to the input port (1) of the valve device (100, 200, 300);
- an air bellow (504) connected to the output port (2) of the valve device (100, 200, 300); and
- an electronic control unit (508) signally connected to the electrical control input unit (106) and configured to provide the electrical input signals (ES), in particular the electrical lift signal (ELi) and the electrical lower signal (ELo) for electrically operating the flow control unit (102).

13. A mechanically controllable air suspension system (500b) for a commercial vehicle (1000b), the mechanically controllable air suspension system (500b) comprising:
- a valve device (100) according to any one of claims 1 to 11,
- a compressed air supply unit (502) for supplying compressed air (A) to the input port (1) of the valve device (100, 200, 300);
- an air bellow (504) connected to the output port (2) of the valve device (100, 200, 300); and
- a mechanical actuator (506) connected to the mechanical control input interface (104) and configured to provide the mechanical input signal (MS) for mechanically operating the flow control unit (102).

14. A mechanically and electrically controllable air suspension system (500) for a commercial vehicle (1000), the air suspension system (500) comprising:
- a valve device (100) according to any one of claims 1 to 11,
- a compressed air supply unit (502) for supplying compressed air (A) to the input port (1) of the valve device (100, 200, 300);
- an air bellow (504) connected to the output port (2) of the valve device (100, 200, 300); and
- a mechanical actuator (506) connected to the mechanical control input interface 104) and configured to provide the mechanical input signal (MS) for mechanically operating the flow control unit (102); and
- an electronic control unit (508) signally connected to the electrical control input unit (106) and configured to provide the electrical input signals (ES), in particular the electrical lift signal (ELi) and the electrical lower signal (ELo) for electrically operating the flow control unit (102).

15. A commercial vehicle (1000) comprising an electrically controllable air suspension system (500a) according to claim 12 or a mechanically controllable air suspension system (500b) in accordance with claim 13 or a mechanically and electrically controllable air suspension system according to claim 14.
